# EUROPEAN PATENT SPECIFICATION

(11) **EP 3 353 672 B1**
(45) Date of publication and mention of the grant of the patent: **21.12.2022**
(21) Application number: 16849813.7
(22) Date of filing: 23.09.2016
(51) Int. Cl.: G06F 16/27, G06F 16/25, G06F 16/22

(54) **METHOD AND APPARATUS FOR TRANSFERRING DATA BETWEEN DATABASES**
VERFAHREN UND VORRICHTUNG ZUR DATENÜBERTRAGUNG ZWISCHEN DATENBANKEN
PROCÉDÉ ET APPAREIL POUR TRANSFÉRER DES DONNÉES ENTRE DES BASES DE DONNÉES

(30) Priority: 25.09.2015 CN 201510623882
(43) Date of publication of application: 01.08.2018
(73) Proprietor: Alibaba Group Holding Limited, Grand Cayman (KY)
(72) Inventor: LIU, Peng, Hangzhou 311121 (CN)
(74) Representative: Finnegan Europe LLP
(86) International application number: PCT/US2016/053582
(87) International publication number: WO 2017/053892

(56) References cited:
- CN-A- 102 999 537
- US-A1- 2006 123 010
- US-A1- 2013 067 017
- Michael Walker: "Batch vs. Real Time Data Processing | Data Science Association", , 24 April 2015 (2015-04-24), XP055648251, Retrieved from the Internet: URL:http://www.datascienceassn.org/content /batch-vs-real-time-data-processing [retrieved on 2019-12-02]

## Description

### TECHNICAL FIELD

The present disclosure generally relates to the field of computer technology and, more particularly, to a method and an apparatus for transferring data between databases.

### BACKGROUND

With the rapid development of the Internet, the volume of data traffic has grown exponentially. Large-scale data processing systems, such as distributed data processing systems, have been developed to handle the ever-growing data traffic.

In a large-scale data processing system, certain valuable data may be generated and stored in a database (e.g., a data warehouse). That valuable data may be transferred, in a process of data backflow, from one database to another database, which may then provide the valuable data for other operations. That valuable data may become backflow data.

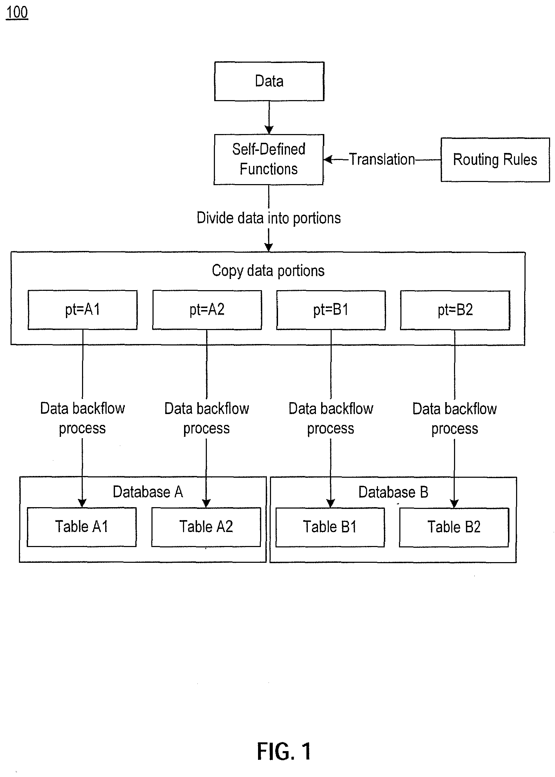

Reference is now made to FIG. 1, which illustrates a data backflow process 100 under the current technology. As shown in FIG. 1, data may be transmitted to a plurality of databases and tables according to a set of routing rules. The routing rules may be maintained by a service system that has access to the data storage. Based on the routing rules, the service system may divide the backflow data into a plurality of data portions, and store the data portions at the one or more tables associated with the databases (e.g., tables A1 and A2 of database A, and tables B1 and B2 of database B, etc.) according to the routing rules. Each data portion may correspond to a table of a database.

Under current technology, the routing rules for data backflow are typically expressed in the Groovy programming language, which are then translated into a set of self-defined functions associated with a big data processing system (e.g., Hadoop, Open Data Processing Service (ODPS), etc.). The translation process is usually tedious.

Moreover, the set of functions translated typically creates a plurality of new tables for the data portions, and copies each data portion to a new table. Given that each table includes multiple partitions, with each partition mapped to a single table of a single database, such an arrangement may lead to waste of database resources.

Further, the data backflow process is usually set up based on the sub-table and sub-database organization. For example, a data backflow process may be configured to transmit the data in a partition to a single table of a single database. The data backflow processes may be executed in a batch mode using a shell script. However, under the current technologies, the number of data backflow processes for transmission of the backflow data may be equal to the number of tables that correspond to the backflow data, and may be very large. As a result, the configuration of the data backflow processes may become complicated and tedious. This often leads to errors.

CN 102 999 537 A describes a system and a method for data migration, wherein the system specifically comprises a configuration reading module, a reading module, a data exchange buffer module, and a writing module. The configuration reading module is used for reading a configuration file of a data migration task, and the configuration file comprises data reading information and data writing information. The reading module is used for reading the data according to the data reading information in the configuration file and converting the read data into an intermediate format to be written into the data exchange buffer module. The data exchange buffer module is used for temporarily storing the written intermediate format data, and the writing module is used for reading the intermediate format data from the data exchange buffer module, writing the information according to the data in the configuration file and converting the intermediate format data into a target format to be written into a target address.

### SUMMARY

According to aspects of the present invention, there are provided a method, an apparatus, a computer readable medium, and a computer program product as set forth in the appended claims. Other features of the invention will be apparent from the dependent claims, and the description which follows. Further features of the present invention will become apparent from the following description of exemplary embodiments with reference to the attached drawings.

Additional objects and advantages of the disclosed embodiments will be set forth in part in the following description, and in part will be apparent from the description, or may be learned by practice of the embodiments. The objects and advantages of the disclosed embodiments may be realized and attained by the elements and combinations set forth in the claims.

It is to be understood that both the foregoing general description and the following detailed description are exemplary and explanatory only and are not restrictive of the disclosed embodiments, as claimed.

### BRIEF DESCRIPTION OF THE DRAWINGS

FIG. 1 is a flow chart illustrating a data backflow process under the current technology.
FIG. 2 is a flow chart illustrating a data transfer process consistent with embodiments of the present disclosure.
FIG. 3 is a block diagram of an offline synchronization apparatus consistent with embodiments of the present disclosure.
FIG. 4 is a flow chart illustrating a data backflow process consistent with embodiments of the present disclosure.
FIG. 5 is a block diagram of a data transfer apparatus consistent with embodiments of the present disclosure.

### DESCRIPTION OF THE EMBODIMENTS

Embodiments of the present disclosure provide a method and an apparatus for transferring data between a plurality of databases. An apparatus according to embodiments of the present disclosure includes a read plug-in and a write plug-in. The apparatus uses the read plug-in to acquire data from a source database based on first configuration information that include information related to a source of data. The apparatus also loads a set of preset routing rules, and determines a target database and a target table based on the set of preset routing rules. The apparatus also uses a write plug-in to write the data into the target table in the target database based on second configuration information that include information related to a type of the target database and an identification of the target database.

With embodiments of the present disclosure, the writing of the data to target databases and target tables may be based on a reuse of previously-translated routing rules. As a result, the aforementioned translation of the routing rules into functions supported by the target database may be avoided, and data backflow operation may be substantially simplified. Moreover, since data is directly transferred to the database without being copied to new tables, as is the case under the current technology, database resources may be utilized more efficiently. Further, in some embodiments of the present disclosure, the data backflow operation may be configured using a single file, which may further simplify the data backflow process and reduce the likelihood of errors.

Reference will now be made in detail to methods and specific implementations that seek to overcome the foregoing shortcomings of current systems and methods for facilitating the login of an account. Examples of these implementations are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

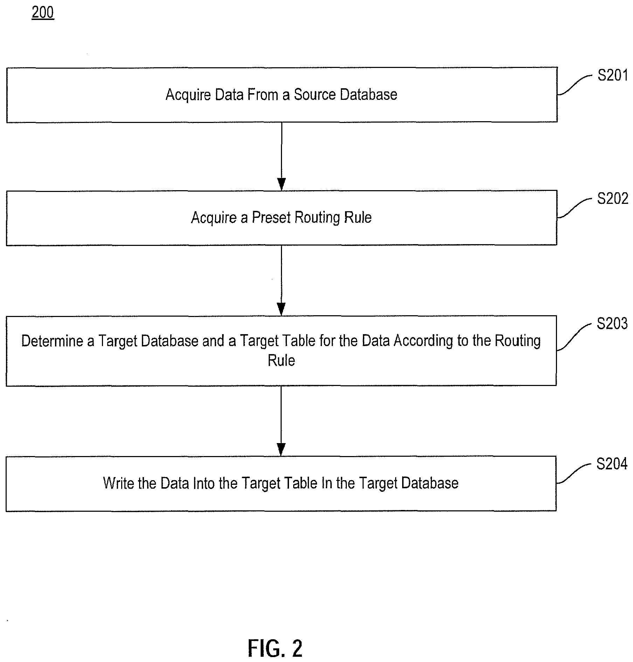

Reference is now made to FIG. 2, which illustrates an exemplary data transfer process method 200 according to embodiments of the present disclosure. The method may be performed by, for example, a computer system communicatively coupled with a plurality of databases. Referring to FIG. 2, method 200 includes steps S201, S202, S203, and S204.

In step S201, the system acquires data from a source device that includes a source database.

In a cloud computing platform, a large amount of data may be generated from daily operations. As an illustrative example, a platform associated with a large-scale e-commerce website may process about 300 TB of data related to products and transactions every day.

The platform generally processes the data according to a set of pre-determined rules to generate backflow data. For example, the e-commerce website may be configured to push different advertisements to different users. The determination of advertisement may be based on data related to the user's historical purchases, the user's activities on other websites, the user's personal information, etc. These data may be acquired from the source database and pushed to a target database associated with the website, which may then access these data to determine the advertisement to display.

In some embodiments, an off-line synchronization apparatus is used to acquire data from the first data source. For a data size of 300 TB, about 60000 off-line synchronization operations may be required.

The cloud computing platform may include up to tens of thousands of computers and may operate on different types of databases, such as MySQL, Oracle, SQLServer, Hadoop, ODPS, ADS, Hbase, and the like. Therefore, an off-line synchronization apparatus according to embodiments of the present disclosure may perform synchronization between databases of different types.

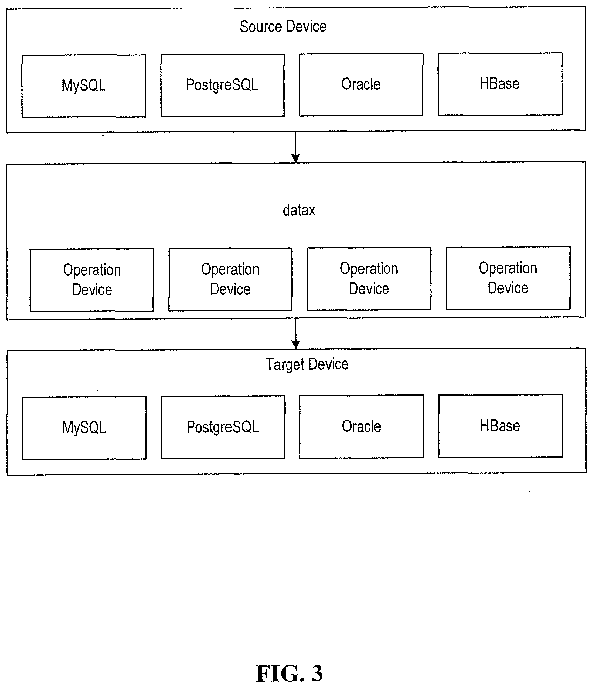

Reference is now made to FIG. 3, which illustrates an exemplary off-line synchronization apparatus 300 according to embodiments of the present disclosure. As shown in FIG. 3, an offline synchronization apparatus 300, such as Datax, may be used for synchronization between various databases. Datax may be written in the JAVA^{™} language, the C language, etc. and is not limited to the examples provided in this disclosure. Off-line synchronization apparatus 300 may include a plurality of operation devices, each of which may provide a data synchronization service (e.g., a Datax Service). For example, as part of the Datax Service, Datax may receive a command associated with a data flowback process (e.g., a start operation command, a stop operation command, etc.), select an operation device to execute the command, and then receive a status from the operation device. During data synchronization, the operation device may acquire the data from the source device and transfer the data to the target device. While FIG. 3 refers to Datax, it is appreciated that any type of offline synchronization apparatus can be used.

The source device and the target device may include any relational database or non-relational database, such as MySQL, Oracle, SQLServer, Hadoop, ODPS, ADS, PostgreSQL, and Hbase, which are not limited to the examples provided in this disclosure. Moreover, off-line synchronization apparatus 300 may perform data transmission between databases of different types. For example, an operation device may acquire data from a MySQL database and write the data into an Hbase databse. The source device may store data generated from a massive amount of data (e.g., data related to the user's historical purchases, the user's activities on other websites, the user's personal information, etc., as described in the illustrative examples above). The data may then be transferred to the target device in the off-line synchronization process for further processing, such as aggregation and classification. Therefore, the off-line synchronization may be part of the data backflow process.

In some embodiments, the source device may include a Reader (read plug-in) and a Writer (write plug-in) to access the Datax Service and to implement exchange of data between the source device and another target device.

In some embodiments, off-line synchronization apparatus 300 may execute a command in a form of a configuration file readable by the Datax Service. The configuration file may include, for example, a JavaScript Object Notation (JSON, a lightweight data interchange format) file, and the JSON configuration file may include a complete description file of a data backflow operation and may include configuration information of a Reader and a Writer.

The Datax provides a Reader configured to acquire data from one or more databases, and a Writer that writes data into one or more databases.

The plug-ins (for the Reader and Writer) may be based on a plug-in model of the Datax, and may be loaded when Datax starts up. A plug-in may be associated with a specific type of data source. For example, a MySQLReader plug-in may represent that the Datax supports reading data from the MySQL database. In some embodiments, a read plug-in associated with a database in the source device may be selected from one or more read plug-ins, and a write plug-in associated with a database in the target device may be selected from one or more write plug-ins.

In some embodiments, the read plug-in may be configured with first configuration information, and the write plug-in may be configured with second configuration information. The first and second configuration information may include information for accessing a database, such as account identifiers, passwords, database identifiers, table identifiers, etc. Moreover, the second configuration information may also include the routing rules represented using Groovy expressions. Therefore, the Reader plug-in may be generated based on the configurations for a data backflow process as reflected in the routing rules, and that the plug-in of the configuration file (e.g., JSON configuration file as discussed above) may be of the same format as the routing rule. The configuration file may then be generated based on the first and second configuration information.

With embodiments of the present application, a single configuration file may be used to configure a data backflow process. As a result, the number of configurations may be substantially reduced, which may simplify the configuration process and reduce the probability of error.

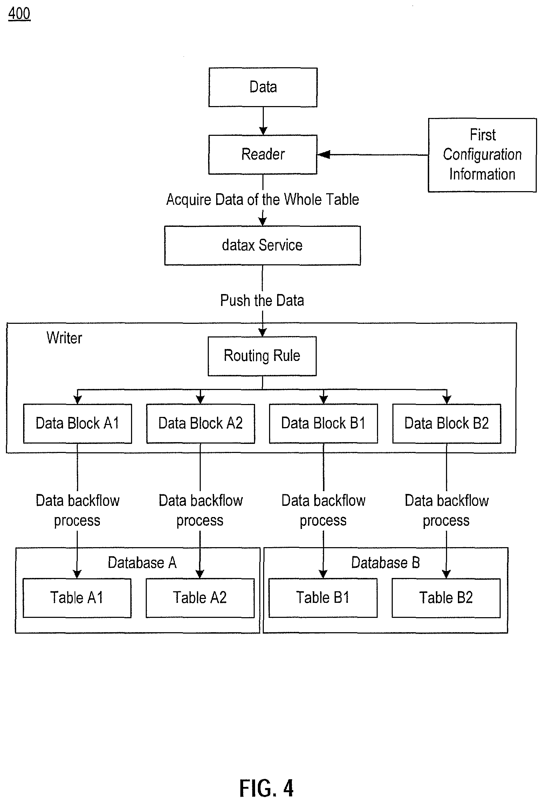

Reference is now made to FIG. 4, which illustrates an exemplary data backflow process 400 consistent with embodiments of the present disclosure. As shown in FIG. 4, first configuration information in a preset configuration file may be acquired by the Reader, which then acquires data from a source database according to the first configuration information. In one data backflow operation, the Reader generally acquires data of the whole table.

The first configuration information may include information about at least one of: an account identifier, a password, a project identifier, a table identifier, partition information, and column information. An example of the first configuration information of the Reader is illustrated as follows:

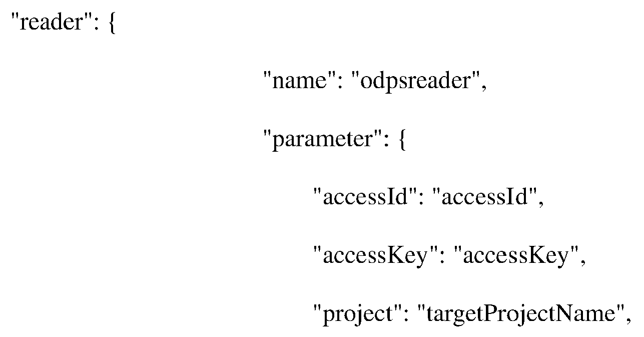

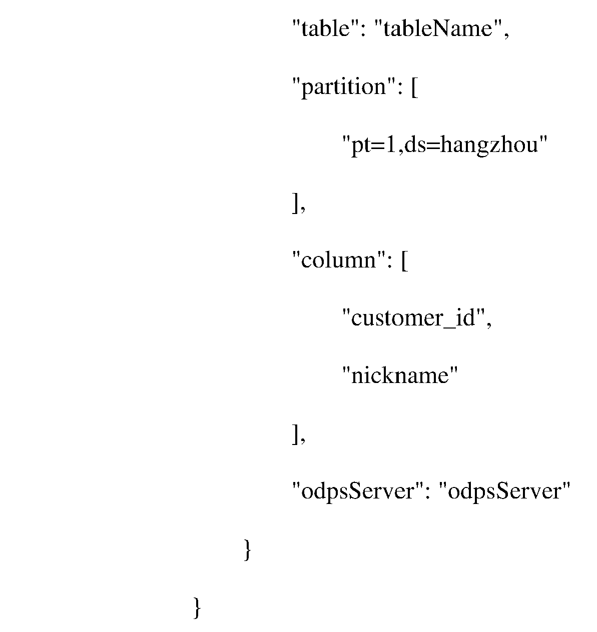

As shown above, the first configuration information may include a project identifier ("targetProjectName"), a table identifier (tableName), partition information ("pt=1, ds=hangzhou"), and column information ("customer_id", "nickname") of an ODPS to be accessed, as well as an account identifier ("accessId"), and a password ("accessKey") for accessing the ODPS. For example, the Reader may provide the accessId and accessKey information to log into an ODPS. After logging in, the Reader may locate a project in the database using the targetProjectName information, and then locate a partition and a column in that partition using the partition and column information. The Reader may then acquire the data in the column.

Referring back to FIG. 2, after step S201 is completed, the system then proceeds to step S202 to acquire a set of preset routing rules.

After the Reader completes acquisition of the data in step S202, the data may be pushed to the Writer by using the Datax Service. The Writer then writes the data into a table of a target database. The writing of the data is based on second configuration information, which may include information such as, for example, a plug-in name and a set of routing rules. As a result, the configuration file provides the routing rules information to the plug-in. In some embodiments, the routing rules refers to a manner of calculating determining a table and a database for writing the data, and may be directly copied from the routing rules maintained by the service system.

An example of the second configuration information of the Writer is illustrated as follows:

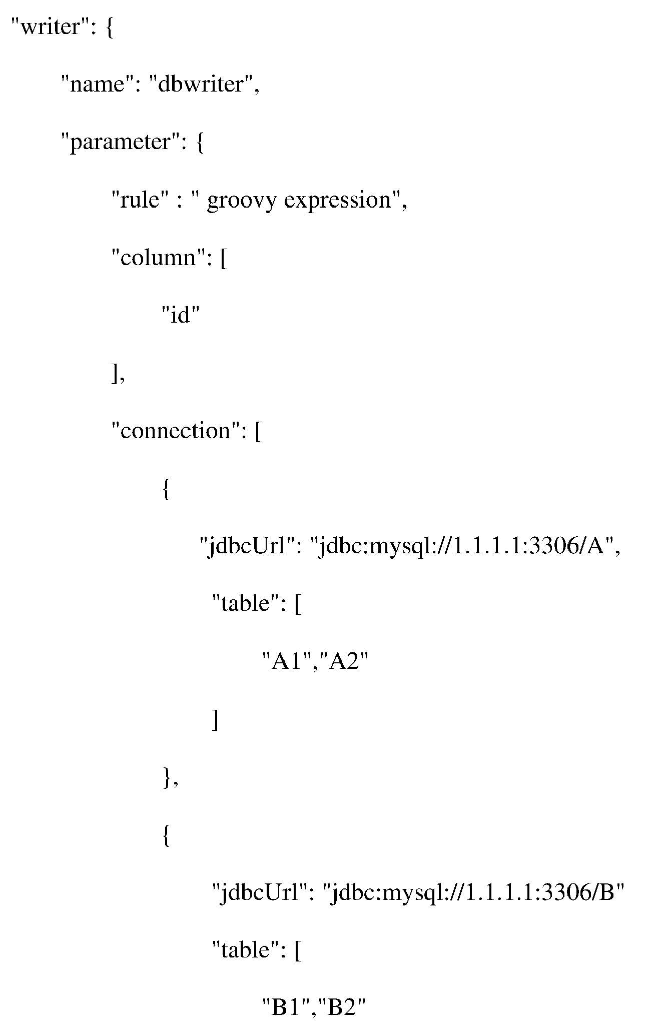

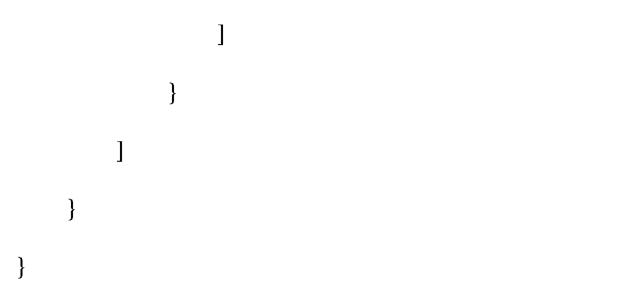

In this example above, the name of the plug-in is "dbwriter", and the routing rules are represented by the Groovy expressions.

In step S203, the system determines a target database and a target table for the writing of the data from a plurality of pre-configured databases and tables.

As discussed above, under current technology, the routing rules are generally represented in Groovy expressions. On the other hand, systems such as Hadoop typically do not support Groovy expressions; as a result, the routing rules represented by Groovy expression are translated into self-defined functions that are supported by Hadoop.

In contrast, in the embodiments of the present application, Datax, an off-line synchronization apparatus, is independent from the cloud computing platform, and may support and understand the Groovy expressions. Therefore, the routing rules in Groovy expressions may be provided to the Datax.

An example of the routing rule is illustrated as follows:

```
         "tableNamePattern":mysq1_writer_test_case_{000}"
         "tableRule" : "((#id#).longValue() % 8)"
```

Here, the "tableNamePattern" may be a table name placeholder expression, while "tableRule" may refer to a routing rule associated with the table. The input to the "#id#.longValue() % 8" expression may be a routing field value, and an output value directly replaces the "000" in the table name placeholder expression.

For example, a value of the "id" field may be 5, which represents that a routing field value is calculated to be 5. In this case, the table name placeholder expression may become "mysql_writer_test_case_005" where "005" replaces the "000" in the expression.

In step S204, the system writes the data into a target table in a target device that includes the target database.

In some embodiments, the second configuration information for the Writer plug-in may include configuration information ("Connection") for one or more databases, the paths associated with these databases ("jdbcUrls"), the tables, etc. When the second configuration information includes information for a plurality of databases and/or tables, the system may determine that the data backflow process is for transmitting data to a plurality of databases and tables. When the second configuration information includes information for a single database and a single table, the system may determine that the data backflow process is for transmitting data to a single database and to a single table.

The system may then determine, from the second configuration information, configuration information associated with the one or more databases (Connection), such as jdbcUrl (database path), account identifier (userName), password, and column information. The system may log into a target database associated with the database path jdbcUrl (database path) using the account identifier (userName) and the password, and then write the data into a column of a target table based on the column information.

In order to improve the writing speed of data, data are written in batches. To facilitate the batch writing of data, the Writer includes a buffer that includes a number of data blocks. The number of data blocks is identical to a number of target tables, and each data block corresponds to a target table. When a preset write condition is satisfied, the Writer writes the data into a buffer data block that corresponds to the target table of the target database.

For example, as shown in FIG. 4, a data block A1 stores data of the table A1 in the database A, a data block A2 stores data of the table A2 in the database A, a data block B1 stores data of the table B1 in the database B, and a data block B1 stores data of the table B2 in the database B. When the preset write condition is met, the data of the data block A1 may be written into the table A1, the data of the data block A2 may be written into the table A2, the data of the data block B1 may be written into the table B1, and the data of the data block B2 may be written into the table B2.

The write condition that triggers the writing of data to a target table includes a data size condition. For example, the data in the data block may be written into the target table in the target database when the data size in the data block exceeds a preset data size threshold (for example, 32 MB).

The write condition that triggers the writing of data to a target table includes a quantity condition. For example, the data in the data block may be written into the target table in the target database when the data in the data block include a number of items that exceeds a preset quantity threshold (for example, 2048 pieces).

In some embodiments, the write condition that triggers the writing of data to a target table may include a complete condition. For example, the data in the data block may be written into the target table in the target database when the Reader completes acquisition of data.

Under the current technology, as part of the data backflow process, the data is divided into portions for each new table and each database that includes the table, and then the data portions are copied into the new tables, and database resources may be wasted as a result. To address the inefficient utilization of database resources, the Writer according to embodiments of the present disclosure determines, based on the routing rules in the memory, which of the tables and databases to which the data are to be written to. The Writer then directly writes the data into the tables and databases without having to recopy data. As a result, the utilization of database resources may become more efficient.

Further, the Writer may support multiples types of databases. For a unified write operation, the second configuration information of the configuration file specifies a type of the target database. For example, the second configuration information may specify "MySQLWriter" for a Writer for MySQL, and "OracleWriter" for a Writer for Oracle, etc.

The Writer may invoke a pre-configured database connection interface (JDBC, Java Data Base Connectivity) according to the type of the database specified in the second configuration information to write the data into the target table in the target database of the specified type. The JDBC is a Java API used for executing SQL statements. JDBC may include a group of categories and interfaces written in the Java language and may cover operations of multiple databases to provide a unified access for various types of databases. With embodiments of the present disclosure, components of the Datax Service may be reused to provide data backflow to different tables and databases.

With embodiment of the present application, the information for target table and target database may be determined based on a set of pre-stored routing rules without the need of translation to a format supported by the database; as a result, the data backflow operation may be substantially simplified. Moreover, the data may be directly written into the tables and databases based on the routing rules without the need of recopying. As a result, the utilization of database resources may become more efficient.

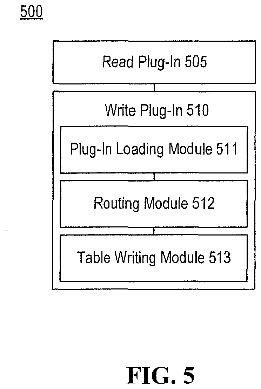

Reference is now made to FIG. 5, which illustrates a data transfer apparatus 500 consistent with embodiments of the present disclosure. In some embodiments, data transfer apparatus 500 is configured to implement method 200 of FIG. 2. As shown in FIG. 5, data transfer apparatus 500 includes a read plug-in 505 and a write plug-in 510.

The read plug-in 505 is configured to acquire data from a source database. The read plug-in 505 is configured to perform at least step S201 of FIG. 2.

The write plug-in 510 may include the following modules: a plug-in loading module 511, a routing module 512, and a table writing module 513.

Plug-in loading module 511 is configured to load a set of preset routing rules. In some embodiments, plug-in loading module 511 may be configured to perform at least step S202 of FIG. 2.

Routing module 512 is configured to determine a target database and a target table for the data based on the routing rules acquired by plug-in loading module 511. The routing module 512 is configured to perform at least step S203 of FIG. 2.

Table writing module 513 is configured to determine the data for the target table in the target database. The table writing module 513 is configured to perform at least step S204 of FIG. 2.

In some embodiments, read plug-in 505 includes the following modules:
a first configuration information reading module, configured to read first configuration information of the read plug-in in a preset configuration file; and
a database reading module, configured to read data from the source database according to the first configuration information.

In a specific implementation, the first configuration information may include at least one of an account, a password, a project, a table, a partition, and a column; and
the database reading module may include the following sub-modules:
a connecting sub-module, configured to connect the source database by using the account and the password;
a searching sub-module, configured to: when the connection is successful, search for the table in the project in the source database, search for the partition in the table, and search for the column in the partition; and
a column reading sub-module, configured to read data from the column.

In some embodiments, the plug-in loading module 511 includes a second configuration information acquisition sub-module configured to acquire, from a preset configuration file, the second configuration information for the write plug-in. The second configuration information may comprise the routing rules, and configuration information of one or more databases.

In some embodiments, table writing module 513 includes a configuration information searching sub-module configured to search for configuration information corresponding to the target database, and a writing sub-module configured to write the data into the target table in the target database according to the configuration information.

In some embodiments, table writing module 513 also includes a data block writing sub-module configured to write the data into a buffer data block that corresponds to in a target table in a target database, and a data block backflow sub-module configured to write the data in the data block into the target table in the target database.

In some embodiments, the data block backflow sub-module of table writing module 513 further comprises at least one of: a first backflow sub-module configured to write the data in the data block into the target table in the target database when the size of the data in the data block exceeds a preset data size threshold; a second backflow sub-module configured to write the data in the data block into the target table in the target database when the a number of data items included in the data in the data block exceeds a preset quantity threshold; and a third backflow sub-module configured to write the data in the data block into the target table in the target database when acquisition of data (e.g. by reader plug-in) is completed.

In some embodiments, the table writing module 513 includes the following sub-modules: a database type identifying sub-module configured to identify a type of the target database, and an interface invoking sub-module configured to invoke a pre-configured database connection interface according to the type of the database to write the data into the target table in the target database.

In some embodiments, data transfer apparatus 500 further includes the following modules: a read plug-in selecting module configured to select, from one or more read plug-ins, a read plug-in associated with a source database; a write plug-in configured to select, from one or more write plug-ins, a write plug-in associated with a target database; and a plug-in configuring module configured to generate the first configuration information for the read plug-in and the second configuration information (which also include the routing rules) for the write plug-in.

As will be understood by those skilled in the art, embodiments of the present disclosure may be embodied as a method, a system or a computer program product. Accordingly, embodiments of the present disclosure may take the form of an entirely hardware embodiment, an entirely software embodiment or an embodiment combining software and hardware. Furthermore, the present invention may take the form of a computer program product embodied in one or more computer available storage media (including but not limited to a magnetic disk memory, a CD-ROM, an optical memory and so on) containing computer available program codes.

Embodiments of the present disclosure are described with reference to flow diagrams and/or block diagrams of methods, devices (systems) and computer program products according to embodiments of the present invention. It will be understood that each flow and/or block of the flow diagrams and/or block diagrams, and combinations of flows and/or blocks in the flow diagrams and/or block diagrams, and the modules and sub-modules of the apparatus, may be implemented by computer program instructions. These computer program instructions may be provided to a processor of a general-purpose computer, a special-purpose computer, an embedded processor, or other programmable data processing devices to produce a machine, such that the instructions, which are executed via the processor of the computer or other programmable data processing devices, create a means for implementing the functions specified in one or more flows in the flow diagrams and/or one or more blocks in the block diagrams.

These computer program instructions may also be stored in a computer readable memory that may direct a computer or other programmable data processing devices to function in a particular manner, such that the instructions stored in the computer readable memory produce a manufactured product including an instruction means which implements the functions specified in one or more flows in the flow diagrams and/or one or more blocks in the block diagrams.

These computer program instructions may also be loaded onto a computer or other programmable data processing devices to cause a series of operational steps to be performed on the computer or other programmable devices to produce processing implemented by the computer, such that the instructions which are executed on the computer or other programmable devices provide steps for implementing the functions specified in one or more flows in the flow diagrams and/or one or more blocks in the block diagrams.

In a typical configuration, a computer device includes one or more Central Processing Units (CPUs), an input/output interface, a network interface and a memory.

The memory may include forms of a volatile memory, a random access memory (RAM) and/or non-volatile memory and the like, such as a read-only memory (ROM) or a flash RAM in a computer readable medium. The memory is an example of the computer readable medium.

The computer readable medium includes non-volatile and volatile media, removable and non-removable media, wherein information storage may be implemented with any method or technology. Information may be modules of computer readable instructions, data structures and programs or other data. Examples of a computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, tape or disk storage or other magnetic storage devices or any other non-transmission media which may used to store information capable of being accessed by a computer device. According to the definition of the context, the computer readable medium does not include transitory media, such as modulated data signals and carrier waves.

It will be further noted that the terms "comprises", "comprising" or any other variations are intended to cover non-exclusive inclusions, so as to cause a process, method, commodity or device comprising a series of elements to not only comprise those elements, but also comprise other elements that are not listed specifically, or also comprise elements that are inherent in this process, method, commodity or device. Therefore, the element defined by a sentence "comprising a..." does not preclude the presence of other same elements in the process, method, commodity or device including said elements under the condition of no more limitations.

As will be understood by those skilled in the art, embodiments of the present invention may be embodied as a method, a system or a computer program product. Accordingly, the present invention may take the form of an entirely hardware embodiment, an entirely software embodiment or an embodiment combining software and hardware. Furthermore, the present invention may take the form of a computer program product embodied in one or more computer available storage media (including but not limited to a magnetic disk memory, a CD-ROM, an optical memory and so on) containing computer available program codes.

One of ordinary skill in the art will understand that the above described embodiments may be implemented by hardware, or software (program codes), or a combination of hardware and software. If implemented by software, it may be stored in the above-described computer-readable media. The software, when executed by the processor may perform the disclosed methods. The computing units and the other functional units described in this disclosure may be implemented by hardware, or software, or a combination of hardware and software. One of ordinary skill in the art will also understand that multiple ones of the above described modules/units may be combined as one module/unit, and each of the above described modules/units may be further divided into a plurality of sub-modules/sub-units.

Other embodiments of the present disclosure will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes may be made without departing from the scope thereof. It is intended that the scope of the invention should only be limited by the appended claims.

## Claims

1. A method of transferring data between a plurality of databases, comprising:
acquiring (S201), by a read plug-in (505), data from a source database based on first configuration information that includes information related to a location of the data in the source database;
loading a set of preset routing rules (S202), which enable data acquired from the source database to be routed to one or more destination databases;
determining one or more target databases and a plurality of target tables based on the set of preset routing rules (S203); and
writing, by a write plug-in (510) comprising a buffer including a number of data blocks identical to a number of target tables, wherein each data block corresponds to a target table, the data acquired from the source database into the data blocks of the buffer, and writing (S204) the data in each of the data blocks to the corresponding target tables in the one or more target databases from the buffer, based on second configuration information that includes information related to a type of the target databases and an identification of the target databases, in dependence on a predetermined threshold condition being exceeded, wherein the predetermined threshold condition comprises any one of: a size of the data in the one or more data blocks comprised in the buffer, or a quantity of the items in the one or more data blocks comprised in the buffer.

2. The method according to claim 1, wherein the acquiring (s201) of data from the source database based on first configuration information comprises:
reading the first configuration information of the read plug-in (505) from a preset configuration file.

3. The method according to claim 1 or claim 2, wherein the first configuration information further comprises an account identifier, a password, a project identifier, a table identifier, partition information, and column information; and
wherein acquiring (s201) the data from the source database based on first configuration information further comprises:
logging into the source database using the account identifier and the password;
if the logging is successful:
searching for a table in the project in the source database based on the table identifier,
searching for the partition in the table based on the partition information,
searching for a column in the partition based on the column information, and
acquiring the data from the column.

4. The method according to any of claims 1-3, wherein loading a set of preset routing rules (s202) further comprises:
acquiring the second configuration information of the write plug-in (510), wherein the second configuration information comprises the set of routing rules.

5. The method according to claim 4, wherein the second configuration information further includes configuration information of one or more databases;
wherein writing the data in each of the data blocks to the corresponding target tables in the one or more target databases further comprises:
searching, from the second configuration information, configuration information corresponding to the target databases; and
writing the data in each of the data blocks to the corresponding target tables in the one or more target databases according to the configuration information corresponding to the one or more target databases.

6. The method according to any of claims 1-5, wherein writing the data in each of the data blocks to the corresponding target tables in the one or more target databases further comprises:
invoking a pre-configured database connection interface based on the information related to a type of the target databases.

7. The method according to claim 1, further comprising:
selecting the read plug-in (505) from a plurality of read plug-ins, wherein the selected read plug-in is associated with the source database; and
selecting the write plug-in (510) from a plurality of write plug-ins, wherein the selected write plug-in is associated with the target database.

8. An apparatus (500) for transferring data between a plurality of databases, the apparatus comprising:
a memory that stores a set of instructions; and
at least one hardware processor configured to execute the set of instructions to cause the apparatus to perform the method according to any of the preceding claims.

9. A computer readable medium that stores a set of instructions that is executable by at least one processor of an apparatus to cause the apparatus to perform the method for transferring data between a plurality of databases according to any of claims 1 to 7.

10. A computer program product comprising instructions that, when executed by a computer, cause the computer to perform the method according to any of claims 1 to 7.

## Patentansprüche

1. Verfahren zum Übertragen von Daten zwischen einer Vielzahl von Datenbanken, umfassend:
Erfassen (S201), durch ein Lese-Plug-in (505), von Daten aus einer Quelldatenbank basierend auf ersten Konfigurationsinformationen, die Informationen enthalten, die sich auf einen Speicherort der Daten in der Quelldatenbank beziehen;
Laden eines Satzes voreingestellter Routing-Regeln (S202), die ermöglichen, dass Daten, die von der Quellendatenbank erfasst werden, zu einer oder mehreren Zieldatenbanken geleitet werden;
Bestimmen einer oder mehrerer Zieldatenbanken und einer Vielzahl von Zieltabellen basierend auf dem Satz von voreingestellten Routing-Regeln (S203); und
Schreiben, durch ein Schreib-Plug-in (510), das einen Puffer umfasst, der eine Anzahl von Datenblöcken enthält, die mit einer Anzahl von Zieltabellen identisch ist, wobei jeder Datenblock einer Zieltabelle entspricht, der Daten, die von der Quellendatenbank erfasst werden, in die Datenblöcke des Puffers, und Schreiben (S204) der Daten in jedem der Datenblöcke in die entsprechenden Zieltabellen in der einen oder mehreren Zieldatenbanken aus dem Puffer, basierend auf zweiten Konfigurationsinformationen, die Informationen, die sich auf einen Typ der Zieldatenbanken beziehen, und eine Identifizierung der Zieldatenbanken enthalten, in Abhängigkeit davon, dass eine vorbestimmte Schwellenbedingung überschritten wird, wobei die vorbestimmte Schwellenbedingung eine der folgenden umfasst:
eine Größe der Daten in dem einen oder den mehreren Datenblöcken, die in dem Puffer umfasst sind, oder eine Menge der Elemente in dem einen oder den mehreren Datenblöcken, die in dem Puffer umfasst sind.

2. Verfahren nach Anspruch 1, wobei das Erfassen (s201) von Daten von der Quelldatenbank basierend auf ersten Konfigurationsinformationen Folgendes umfasst:
Lesen der ersten Konfigurationsinformationen des Lese-Plug-ins (505) aus einer voreingestellten Konfigurationsdatei.

3. Verfahren nach Anspruch 1 oder Anspruch 2, wobei die ersten Konfigurationsinformationen ferner eine Kontokennung, ein Passwort, eine Projektkennung, eine Tabellenkennung, Partitionsinformationen und Spalteninformationen umfassen; und
wobei das Erfassen (s201) der Daten von der Quelldatenbank basierend auf ersten Konfigurationsinformationen ferner Folgendes umfasst:
Einloggen in die Quelldatenbank unter Verwendung der Kontokennung und des Passworts;
wenn das Einloggen erfolgreich ist:
Suchen nach einer Tabelle in dem Projekt in der Quelldatenbank basierend auf der Tabellenkennung,
Suchen nach der Partition in der Tabelle basierend auf den Partitionsinformationen,
Suchen nach einer Spalte in der Partition basierend auf den Spalteninformationen und
Erfassen der Daten aus der Spalte.

4. Verfahren nach einem der Ansprüche 1-3, wobei das Laden eines Satzes von voreingestellten Routing-Regeln (s202) ferner Folgendes umfasst:
Erfassen der zweiten Konfigurationsinformationen des Schreib-Plug-ins (510), wobei die zweiten Konfigurationsinformationen den Satz von Routing-Regeln umfassen.

5. Verfahren nach Anspruch 4, wobei die zweiten Konfigurationsinformationen ferner Konfigurationsinformationen einer oder mehrerer Datenbanken enthalten;
wobei das Schreiben der Daten in jedem der Datenblöcke in die entsprechenden Zieltabellen in der einen oder mehreren Zieldatenbanken ferner Folgendes umfasst:
Suchen, aus den zweiten Konfigurationsinformationen, von Konfigurationsinformationen, die den Zieldatenbanken entsprechen; und
Schreiben der Daten in jedem der Datenblöcke in die entsprechenden Zieltabellen in der einen oder mehreren Zieldatenbanken gemäß den Konfigurationsinformationen, die der einen oder mehreren Zieldatenbanken entsprechen.

6. Verfahren nach einem der Ansprüche 1-5, wobei das Schreiben der Daten in jedem der Datenblöcke in die entsprechenden Zieltabellen in der einen oder mehreren Zieldatenbanken ferner Folgendes umfasst:
Aufrufen einer vorkonfigurierten Datenbankverbindungsschnittstelle basierend auf den Informationen bezüglich eines Typs der Zieldatenbanken.

7. Verfahren nach Anspruch 1, ferner umfassend:
Auswählen des Lese-Plug-ins (505) aus einer Vielzahl von Lese-Plug-ins, wobei das ausgewählte Lese-Plug-in der Quelldatenbank zugeordnet ist; und
Auswählen des Schreib-Plug-ins (510) aus einer Vielzahl von Schreib-Plug-ins, wobei das ausgewählte Schreib-Plug-in der Zieldatenbank zugeordnet ist.

8. Vorrichtung (500) zum Übertragen von Daten zwischen einer Vielzahl von Datenbanken, wobei die Vorrichtung umfasst:
einen Speicher, der einen Satz von Anweisungen speichert; und
mindestens einen Hardwareprozessor, der dazu konfiguriert ist, den Satz von Anweisungen auszuführen, um zu bewirken, dass die Vorrichtung das Verfahren nach einem der vorangehenden Ansprüche durchführt.

9. Computerlesbares Medium, auf dem ein Satz von Anweisungen gespeichert ist, der durch mindestens einen Prozessor einer Vorrichtung ausführbar ist, um zu bewirken, dass die Vorrichtung das Verfahren zum Übertragen von Daten zwischen einer Vielzahl von Datenbanken nach einem der Ansprüche 1 bis 7 durchführt.

10. Computerprogrammprodukt, umfassend Anweisungen, die bei Ausführung durch einen Computer bewirken, dass der Computer das Verfahren nach einem der Ansprüche 1 bis 7 durchführt.

## Revendications

1. Procédé de transfert de données entre une pluralité de bases de données, comprenant :
l'acquisition (S201), par un module d'extension de lecture (505), de données à partir d'une base de données source sur la base de premières informations de configuration qui comprennent des informations relatives à un emplacement des données dans la base de données source ;
le chargement d'un ensemble de règles d'acheminement prédéfinies (S202), qui permettent aux données acquises à partir de la base de données source d'être acheminées vers une ou plusieurs bases de données de destination ;
la détermination d'une ou plusieurs bases de données cibles et d'une pluralité de tables cibles sur la base de l'ensemble de règles d'acheminement prédéfinies (S203) ; et
l'écriture, par un module d'extension d'écriture (510) comprenant une mémoire tampon comprenant un nombre de blocs de données identiques à un nombre de tables cibles, dans lequel chaque bloc de données correspondant à une table cible, des données acquises à partir de la base de données source dans les blocs de données de la mémoire tampon, et l'écriture (S204) des données dans chacun des blocs de données dans les tables cibles correspondantes dans l'une ou plusieurs bases de données cibles à partir de la mémoire tampon, sur la base de deuxièmes informations de configuration qui comprennent des informations liées à un type des bases de données cibles et une identification des bases de données cibles, en fonction du dépassement d'une condition de seuil prédéterminée, dans lequel la condition de seuil prédéterminée comprend l'une quelconque de : une taille des données dans l'un ou plusieurs blocs de données compris dans la mémoire tampon, ou une quantité des éléments dans l'un ou plusieurs blocs de données compris dans la mémoire tampon.

2. Procédé selon la revendication 1, dans lequel l'acquisition (s201) de données à partir de la base de données source sur la base de premières informations de configuration comprend :
la lecture des premières informations de configuration du module d'extension de lecture (505) à partir d'un fichier de configuration prédéfini.

3. Procédé selon la revendication 1 ou la revendication 2, dans lequel les premières informations de configuration comprennent en outre un identifiant de compte, un mot de passe, un identifiant de projet, un identifiant de table, des informations de partition et des informations de colonne ; et
dans lequel l'acquisition (s201) des données à partir de la base de données source sur la base des premières informations de configuration comprend en outre :
la connexion à la base de données source à l'aide de l'identifiant de compte et du mot de passe ;
si la connexion réussit :
la recherche d'une table dans le projet dans la base de données source sur la base de l'identifiant de la table,
la recherche de la partition dans la table sur la base des informations de partition,
la recherche d'une colonne dans la partition sur la base des informations de colonne, et
l'acquisition des données à partir de la colonne.

4. Procédé selon l'une quelconque des revendications 1 à 3, dans lequel le chargement d'un ensemble de règles d'acheminement prédéfinies (s202) comprend en outre :
l'acquisition des deuxièmes informations de configuration du module d'extension d'écriture (510), dans lequel les deuxièmes informations de configuration comprennent l'ensemble de règles d'acheminement.

5. Procédé selon la revendication 4, dans lequel les deuxièmes informations de configuration comprennent en outre des informations de configuration d'une ou plusieurs bases de données ;
dans lequel l'écriture des données dans chacun des blocs de données dans les tables cibles correspondantes dans l'une ou plusieurs bases de données cibles comprend en outre :
la recherche, à partir des deuxièmes informations de configuration, des informations de configuration correspondant aux bases de données cibles ; et
l'écriture des données dans chacun des blocs de données dans les tables cibles correspondantes dans l'une ou plusieurs bases de données cibles selon les informations de configuration correspondant à l'une ou plusieurs bases de données cibles.

6. Procédé selon l'une quelconque des revendications 1 à 5, dans lequel l'écriture des données dans chacun des blocs de données dans les tables cibles correspondantes dans l'une ou plusieurs bases de données cibles comprend en outre :
l'appel d'une interface de connexion à une base de données préconfigurée sur la base des informations relatives à un type des bases de données cibles.

7. Procédé selon la revendication 1, comprenant en outre :
la sélection du module d'extension de lecture (505) parmi une pluralité de modules d'extension de lecture, dans lequel le module d'extension de lecture sélectionné est associé à la base de données source ; et
la sélection du module d'extension d'écriture (510) parmi une pluralité de modules d'extension d'écriture, dans lequel le module d'extension d'écriture sélectionné est associé à la base de données cible.

8. Appareil (500) pour transférer des données entre une pluralité de bases de données, l'appareil comprenant :
une mémoire qui stocke un ensemble d'instructions ; et
au moins un processeur matériel configuré pour exécuter l'ensemble d'instructions pour amener l'appareil à exécuter le procédé selon l'une quelconque des revendications précédentes.

9. Support de stockage lisible par ordinateur qui stocke un ensemble d'instructions qui sont exécutables par au moins un processeur d'un appareil pour amener l'appareil à exécuter le procédé de transfert de données entre une pluralité de bases de données selon l'une quelconque des revendications 1 à 7.

10. Produit programme informatique comprenant des instructions qui, lorsqu'elles sont exécutées par un ordinateur, amènent l'ordinateur à exécuter le procédé selon l'une quelconque des revendications 1 à 7.
